# DEMANDE DE BREVET EUROPEEN

(11) **EP 1 816 593 A1**
(43) Date de publication de la demande: **08.08.2007**
(21) Numéro de dépôt: 06290210.1
(22) Date de dépôt: 03.02.2006
(51) Int. Cl.: G06K 19/077

(54) **Connecteur de carte a puce**

(71) Demandeur: Axalto SA, 92120 Montrouge (FR)
(72) Inventeur: Barbe, Serge, c/o AXALTO SA, 50 avenue Jean Jaures 92120 Montrouge (FR); Hauber, Francis, c/o AXALTO SA, 50 avenue Jean Jaures 92120 Montrouge (FR)
(74) Mandataire: Cour, Pierre

(57) **Abrégé**

Il est proposé un connecteur (100) de carte à puce réalisé sur une couche métallique qui comporte deux séries de plages de contact (101 à 108). Chaque série de plage de contact comporte trois ou quatre plages alignées. Les deux séries sont disposées afin que les plages soient alignées selon deux droites parallèles, une ligne médiane (120) du connecteur étant située à égale distance de chacune des séries. Le connecteur dispose en outre d'au moins une plage de contact additionnelle (109 à 112) placée entre les deux séries. La plage additionnelle s'étend dans la prolongation d'une plage de l'une des séries dans une direction perpendiculaire à la ligne médiane sans dépasser la ligne médiane.

## Description

L'invention se rapporte à un connecteur de carte à puce.

Les cartes à puce sont des objets portables ayant une forme de carte et comportant au moins un circuit électronique permettant de mémoriser et/ou traiter des données. Les cartes à puce peuvent disposer d'une interface par contact conformément à la norme ISO 7816. Dans ce cas le circuit électronique fait partie d'un module rapporté sur la carte à puce. Le module comporte par exemple un substrat isolant, un circuit intégré placé sur une face du substrat et des plages de contact placées sur l'autre face, les plages de contact étant électriquement reliées à des plots de contact du circuit intégré.

Les plages de contact définissent un connecteur de carte à puce. Un connecteur de carte à puce conforme à la norme ISO 7816 comporte 6 ou 8 plages de contact électrique utiles. Les plages de contact sont nommées C1 à C8 dans la norme 7816-2. En outre la norme prévoit l'attribution des plages de contact à des signaux particulier: la plage C1 reçoit la tension d'alimentation Vcc, C2 supporte le signal RST d'initialisation, C3 correspond à un signal d'horloge CLK, C4 correspond au signal de données D+ pour une communication USB, C5 reçoit une tension de masse GND, C6 reçoit la tension VPP de programmation de carte à mémoire, C7 correspond à un signal I/O d'échange de données, et C8 correspond au signal de données D-pour une communication USB. En outre, les plages C4 et C8 peuvent être utilisées pour autre chose que de l'USB.

Actuellement, certaines cartes peuvent disposer également d'une antenne pour permettre la communication sans fil. Pour des raisons pratiques, il est préférable de pouvoir accéder directement aux contacts de l'antenne pour des raisons de test et/ou pour connecter une antenne externe. Une solution consiste à utiliser le contact C6 pour connecter une antenne, la tension VPP n'étant pas utilisée pour les cartes à microprocesseur. Cependant certains modes de réalisation d'antenne connus nécessitent l'utilisation d'une deuxième patte de connexion.

Actuellement, la norme ISO 7816 prévoit qu'une carte peut communiquer en utilisant le protocole ISO 7816-3 en utilisant les plage C1, C2, C3, C5, C6 et C7 ou le protocole USB en utilisant les plages C1, C4, C5 et C8. Par ailleurs, il est également connu d'utiliser d'autres protocoles de communication conjointement au protocole ISO en rajoutant des plages de contact supplémentaire. A titre d'exemple, le brevet US 6,634,565 montre une carte à puce fonctionnant selon les protocoles ISO, USB et SPI. Pour utiliser le protocole SPI, cinq plages de contact sont ajoutées au milieu des plages C1 à C8. A titre d'exemple, la demande WO 20041095365 dévoile une carte SIM utilisant en outre le protocole MMC avec l'ajout d'un connecteur MMC à côté du connecteur ISO. Toujours à titre d'exemple, la demande WO 20041095365 dévoile également une carte SIM utilisant en outre le protocole SD avec un connecteur ISO sur lequel deux contacts additionnels ont été ajoutés en prolongation des contacts ISO C1 à C8.

A l'heure actuelle, la combinaison d'un protocole MMC avec un protocole ISO et éventuellement un protocole USB présentent de nombreux avantages en terme de capacité d'échange de données. Cependant pour des raisons de coût et de simplicité de fabrication, il est préférable d'avoir un unique connecteur plutôt que deux connecteurs séparés. En outre, il convient de garder la compatibilité avec le connecteur ISO actuel afin de permettre une compatibilité des anciens lecteurs avec les nouvelles cartes et une compatibilité des anciennes cartes avec les nouvelles cartes.

Une solution de connecteur comportant des contacts au milieu des contacts ISO, comme montré dans US 6,634,565, paraît être la seule possibilité pour garder la compatibilité des anciens lecteurs avec les nouvelles cartes. La compatibilité des nouveaux lecteurs avec les anciennes cartes n'est cependant pas assurée avec ce type de connecteur. En effet, la norme ISO définit la taille minimale des plages de contact sur la carte ainsi que la taille maximale du connecteur. Cette définition de connecteur a laissé beaucoup de liberté aux fabricants de carte et de connecteur pour réaliser des formes très variées répondant aussi bien à des caractéristiques fonctionnelles qu'esthétiques.

Parmi ces différentes formes il en existe une qui consiste à diviser le connecteur en 6 ou 8 contacts, chaque contact s'étalant jusqu'au milieu du connecteur. La connexion d'une carte de ce type dans un lecteur disposant de contacts comme montré dans US 6,634,565 risque d'entraîner des court-circuits entre les contacts ISO.

A l'heure actuelle, l'homme du métier ne dispose pas d'un connecteur permettant une complète compatibilité avec le standard ISO 7816 tout en incorporant des contacts supplémentaires pour pouvoir supporter le standard MMC et/ou la connexion d'une antenne sur des plages de contact.

Afin de remédier au problème précité, il est proposé un nouveau connecteur compatible avec le standard ISO et disposant de contacts supplémentaires entre les plages de contact ISO.

Plus particulièrement, l'invention est un connecteur de carte à puce réalisé sur une couche métallique qui comporte deux séries de plages de contact. Chaque série de plage de contact comporte trois ou quatre plages alignées. Les deux séries sont disposées afin que les plages soient alignées selon deux droites parallèles, une ligne médiane du connecteur étant située à égale distance de chacune des séries. Le connecteur dispose en outre d'au moins une plage de contact additionnelle placée entre les deux séries. La plage additionnelle s'étend dans la prolongation d'une plage de l'une des séries dans une direction perpendiculaire à la ligne médiane sans dépasser la ligne médiane.

Préférentiellement, le connecteur comporte au moins trois plages additionnelles. Les plages additionnelles peuvent être au nombre de quatre. Au moins deux plages additionnelles peuvent être alignées selon une droite perpendiculaire à la ligne médiane. Les deux séries de plages de contact définissent les contacts C1 à C8 d'une carte à puce conforme à la norme 7816-2.

Selon différents choix de réalisation, trois des plages additionnelles peuvent être dédiées au protocole MMC. Une plage additionnelle peut être utilisée pour connecter une antenne. Deux plages additionnelles sont utilisées pour le bus de données du protocole USB.

Selon un autre aspect, l'invention est une carte à puce comportant un corps de carte munie d'une cavité dans laquelle est placé un module électronique, le module électronique comportant au moins un circuit intégré disposant de bornes de contact électriquement reliées à des plages de contact définissant un connecteur. Lesdites plages de contact sont placées en surface de ladite carte. Le connecteur est conforme à celui précédemment défini.

L'invention sera mieux comprise, et d'autres particularités et avantages apparaîtront à la lecture de la description qui va suivre, la description faisant référence aux dessins annexés, parmi lesquels :
les figures 1 et 2 représentent un connecteur selon l'invention à différents stades de fabrication, et
la figure 3 représente une carte à puce intégrant un connecteur selon l'invention.

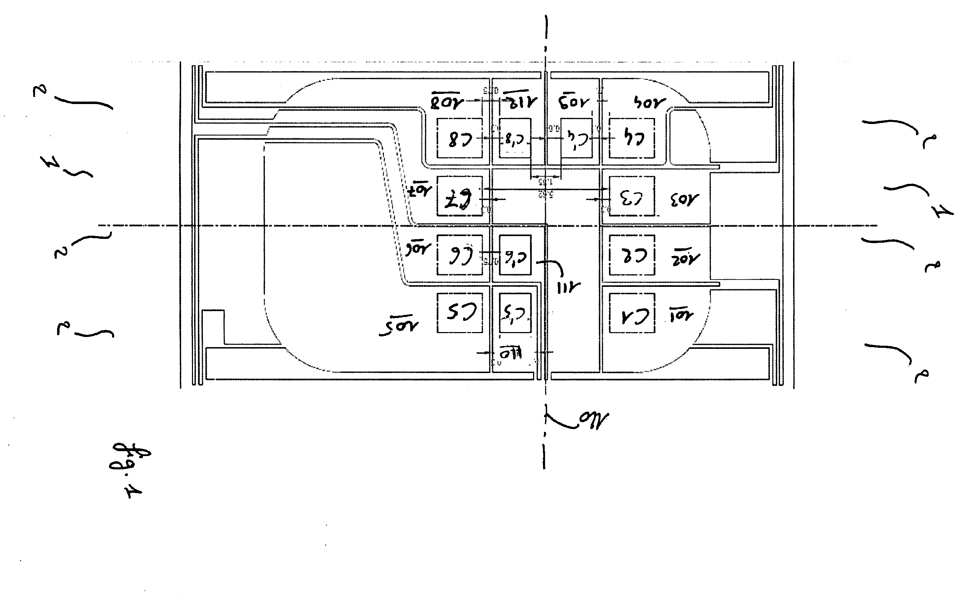

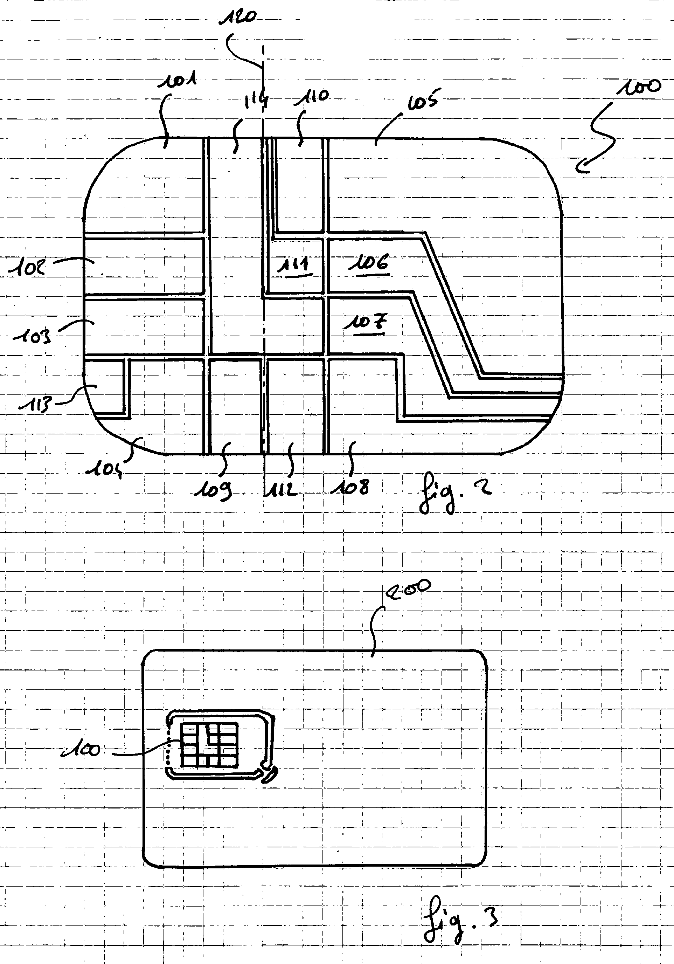

La figure 1 représente un morceau de bande supportant des connecteurs selon l'invention. Pour des raisons de simplification de dessin un seul connecteur est représenté. La bande 1 constitue un substrat isolant d'un type connu et disposant de perforations 2 pour pouvoir être entraînée à l'intérieur de différente machine de fabrication. Sur une face de ce substrat, une couche métallique et déposée puis gravée selon une technique connue pour obtenir un connecteur de carte à puce. La couche métallique est gravée de manière à définir après découpe le connecteur 100 représenté sur la figure 2. Pour simplifier la description, le connecteur 100 est décrit conjointement à l'aide de ces deux figures et les mêmes références sont utilisées pour désigner le même élément.

Lorsque le connecteur 100 est sur la bande, toutes les plages sont électriquement reliées. La bande est utilisée pour transporter le connecteur durant toutes les phases de fabrication d'un module électronique de carte à puce. De manière connue, un circuit électronique est collé sur la face du substrat 1 qui est opposée à la couche métallique. Puis, des plots de contact su circuit intégré sont électriquement reliés aux différentes plages de contact 101 à 112, à travers le substrat 1. Après avoir effectuer les liaisons électriques, par exemple à l'aide de fil d'or, le circuit intégré est noyé dans de la résine est le module fini est découpé par poinçonnage. Le connecteur 100 ressemble alors au connecteur de la figure 2. Le module obtenu est ensuite collé à l'intérieur d'une cavité situé dans un corps de carte pour obtenir une carte à puce comme montrée sur la figure 3.

Le connecteur 100 comporte ici douze plages de contact 101 à 112 reliées au circuit intégré (monté derrière le connecteur) et deux plages inactives 113 et 114. Huit plages de contact 101 à 108 constituent les huit contacts C1 à C8 définis dans la norme 7816-2. Il est à noter que les contacts C4 et C8 de la norme sont optionnels et donc ces huit contacts peuvent être réduits à six contacts. En outre, la norme ne prévoit qu'une taille minimale de contact représentée par les carrés entourant les notations C1 à C8 sur la figure 1. Les plages de contact 101 à 108 sont ici répartie en deux séries de contacts alignés selon deux droites parallèles. Une ligne médiane fictive 120 est placée au milieu des deux séries de contacts parallèlement au deux séries afin de servir de repère pour le placement des autres plages de contact 109 à 112.

Les plages de contact 109 à 112 constituent de plages additionnelles placées entre les deux séries de plages de contact 101 à 108. Ici, les plages additionnelles sont au nombre de quatre car le connecteur 100 est destiné à être utilisés avec un mode de communication ISO, un mode de communication USB, un mode de communication MMC et un mode de communication avec antenne utilisant deux contacts. Il va de soit que ce nombre peut être réduit si l'on diminue le nombre de mode de communication. Sans le mode MMC, une seule plage additionnelle suffit. Avec un mode de communication sans contact utilisant un seul contact, trois contacts additionnels suffisent. Il pourrait également être possible d'ajouter un nombre de contact plus élevé si les conditions d'utilisation des contacts sont compatibles avec les contraintes électriques qui découlent de la structure de connecteur 100 objet de la présente invention.

Chaque plage additionnelle 109 à 112 est placée à côté d'une plage de contact 104-106 et 112 et s'étend à parti de ladite plage de contact en direction de la ligne médiane 120. Chaque plage additionnelle 109 à 112 est de la même largeur que la plage additionnelle à côté de laquelle elle se trouve et ne dépasse pas la ligne médiane. Les zones de contact C'4, C'5, C'6 et C'7, plus petites que les plages de contact 109 à 112 qui y sont associées, définissent l'endroit où un connecteur doit entrer en contact avec la plage pour profiter pleinement de toutes les capacités de communication de la carte.

Avec un tel dessin de connecteur, une carte à puce 200 disposant d'un tel connecteur 100 ne va pas créer de perturbation dans un lecteur car les plages additionnelles 109 à 112 ne risquent pas de perturber les zones de contact C1 à C8. En outre, si une carte d'ancienne génération est placée dans un lecteur prévu pour avoir les douze zones de contact C1-C8, C'4-C'6 et C'8 celle-ci peut créer des court-circuits au niveau du lecteur avec une ou plusieurs zone de contact additionnel C'4-C'6 et/ou C'8. Mais les court-circuits sont ici contrôlables. Une plage centrale mettrait en court-circuit toutes les zones de contact additionnel C'4, C'5, C'6 et C'8, éventuellement avec C5. Une carte dont les zones de contact s'étendraient de manière trop proche de la ligne médiane 120 créerait des court-circuits limités à la zone de contact additionnel et la zone de contact voisine, c'est à dire C4 avec C'4, C5 avec C'5, C6 avec C'6, C8 avec C'8.

En prenant ces contraintes de court-circuit en compte, il est possible d'affecter différents signaux aux zones de contacts. Le tableau suivant montre deux exemple d'affectation possible qui ne posent aucun problème de compatibilité avec le standard ISO basic utilisant C1 à C6, l'un des exemples étant en outre compatible avec l'affectation de l'USB conforme à la norme ISO.

| Standard Appliqué | Nom de signal appliqué | Zone de contact (1^{er} exemple) | Zone de contact (2^{ème} exemple) |
|---|---|---|---|
| ISO/USB/MMC /Mode Radio | Vcc | C1 | C1 |
| | GND | C5 | C5 |
| ISO 7816 | RST | C2 | C2 |
| | CLK | C3 | C3 |
| | I/O | C7 | C7 |
| USB | D+ | C4 | C'4 |
| | D- | C8 | C'8 |
| MMC | MMC Dat | C'4 | C4 |
| | MMC Clk | C'6 | C6 |
| | MMC Cmd | C'8 | C8 |
| Mode Radio | Antenne Ext1 | C6 | C'5 |
| | Antenne Ext2 | C'5 | C'6 |

Comme indiqué précédemment, il n'est pas nécessaire d'implémenter tous les standards en même temps et différentes variantes de réalisation peuvent découler du choix de l'utilisation d'un ou plusieurs mode de communication. En outre, le Mode Radio peut n'avoir besoin que d'une seule borne de connexion pour l'antenne, dans ce cas on utilise que le signal Antenne Ext1.

## Revendications

1. Connecteur de carte à puce réalisé sur une couche métallique qui comporte deux séries de plages de contact, chaque série de plage de contact comportant trois ou quatre plages alignées, les deux séries étant disposées afin que les plages soient alignées selon deux droites parallèles, une ligne médiane du connecteur étant située à égale distance de chacune des séries, le connecteur disposant en outre d'au moins une plage de contact additionnelle placée entre les deux séries, **caractérisé en ce que** la plage additionnelle s'étend dans la prolongation d'une plage de l'une des séries dans une direction perpendiculaire à la ligne médiane sans dépasser la ligne médiane.

2. Connecteur selon la revendication 1, qui comporte au moins trois plages additionnelles.

3. Connecteur selon la revendication 2, dans lequel les plages additionnelles sont au nombre de quatre.

4. Connecteur selon la revendication 2 ou 3, dans lequel au moins deux plages additionnelles sont alignées selon une droite perpendiculaire à la ligne médiane.

5. Connecteur selon l'une des revendications précédentes, dans lequel les deux séries de plages de contact définissent les contacts C1 à C8 d'une carte à puce conforme à la norme 7816-2.

6. Connecteur selon la revendication 4 lorsqu'elle dépend de la revendication 2, dans lequel trois des plages additionnelles sont dédiées au protocole MMC.

7. Connecteur selon la revendication 5 ou 6, dans lequel une plage additionnelle est utilisée pour connecter une antenne.

8. Connecteur selon l'une des revendications 2 à 7, dans lequel deux plages additionnelles sont utilisées pour le bus de données du protocole USB.

9. Carte à puce comportant un corps de carte munie d'une cavité dans laquelle est placé un module électronique, le module électronique comportant au moins un circuit intégré disposant de bornes de contact électriquement reliées à des plages de contact définissant un connecteur, lesdites plages de contact étant placées en surface de ladite carte, **caractérisé en ce que** le connecteur est conforme à l'une des revendications 1 à 8.
